# EUROPÄISCHE PATENTANMELDUNG

(11) **EP 3 715 597 A1**
(43) Veröffentlichungstag der Anmeldung: **30.09.2020**
(21) Anmeldenummer: 20161491.4
(22) Anmeldetag: 06.03.2020
(51) Int. Cl.: F01N 3/28, F01N 3/20, F01N 13/00

(54) **SCR-KATALYSATOR, ABGASNACHBEHANDLUNGSSYSTEM UND BRENNKRAFTMASCHINE**

(30) Priorität: 28.03.2019 DE 102019108091
(71) Anmelder: MAN Energy Solutions SE, 86153 Augsburg (DE)
(72) Erfinder: Toshev, Plamen, 86159 Augsburg (DE); Nana, Francis, 81929 München (DE)

(57) **Zusammenfassung**

SCR-Katalysator (9) für ein Abgasnachbehandlungssystem einer Brennkraftmaschine, nämlich für ein SCR-Abgasnachbehandlungssystem, wobei der SCR-Katalysator eine Tragstruktur (24) für von Abgas durchströmbare Wabenkörper (25) aufweist, die von einem metallischen Gehäuse (26) abschnittsweise umgeben sind. Die Tragstruktur weist einen ersten plattenartigen Tragkörper (27) mit ersten Öffnungen (31), einen zweiten plattenartigen Tragkörper (28) mit zweiten Öffnungen (32) und sich zwischen den Tragkörpern erstreckende Streben (29) auf, die zusammen Aufnahmebereiche (30) für die Wabenkörper (25) definieren, wobei jeder der Wabenkörper (25) über eine jeweilige erste Öffnung (31) des ersten Tragkörpers (27), die eine größere Querschnittsfläche als der von dem jeweiligen Gehäuse (26) umgebenen Wabenkörper (25) aufweist, in einen jeweiligen Aufnahmebereich (30) für den jeweiligen Wabenkörper (35) einführbar ist, und wobei eine jeweilige zweite Öffnung (32) des zweiten Tragkörpers (28) eine kleinere Querschnittsfläche als der von dem jeweiligen Gehäuse (26) umgebenen Wabenkörper (25) aufweist, sodass der jeweilige Wabenkörper (25) nur über die jeweilige erste Öffnung (31) in den jeweiligen Aufnahmebereich (30) einführbar ist und aus demselben entnehmbar ist. Mit dem ersten Tragkörper (27) sind rahmenartige Haltemittel (33) für einen oder mehrere Wabenkörper (25) verbunden, um in den jeweiligen Aufnahmebereichen (30) angeordnete Wabenkörper (25) in der Tragstruktur (24) zu fixieren. Fig. 5

## Beschreibung

Die Erfindung betrifft einen SCR-Katalysator für ein Abgasnachbehandlungssystem einer Brennkraftmaschine. Des Weiteren betrifft die Erfindung eine Abgasnachbehandlungssystem mit einem SCR-Katalysator und eine Brennkraftmaschine mit einem Abgasnachbehandlungssystem.

Bei Verbrennungsprozessen in stationären Brennkraftmaschinen, die zum Beispiel in Kraftwerken zum Einsatz kommen, sowie bei Verbrennungsprozessen in nicht-stationären Brennkraftmaschinen, die zum Beispiel auf Schiffen zum Einsatz kommen, entstehen Stickoxide, wobei diese Stickoxide typischerweise bei der Verbrennung schwefelhaltiger, fossiler Brennstoffe, wie Kohle, Steinkohle, Braunkohle, Erdöl, Schweröl oder Dieselkraftstoffen entstehen. Daher sind solchen Brennkraftmaschinen Abgasnachbehandlungssysteme zugeordnet, die der Reinigung, insbesondere der Entstickung, des die Brennkraftmaschine verlassenden Abgases dienen.

Zur Reduzierung von Stickoxiden im Abgas kommen in aus der Praxis bekannten Abgasnachbehandlungssystemen in erster Linie sogenannte SCR-Katalysatoren zum Einsatz. In einem SCR-Katalysator erfolgt eine selektive katalytische Reduktion von Stickoxiden, wobei für die Reduktion der Stickoxide Ammoniak (NH₃) als Reduktionsmittel benötigt wird. Das Ammoniak bzw. eine Ammoniak-Vorläufersubstanz, wie zum Beispiel Urea, wird hierzu stromaufwärts des SCR-Katalysators in flüssiger Form in das Abgas eingebracht, wobei das Ammoniak bzw. die Ammoniak-Vorläufersubstanz stromaufwärts des SCR-Katalysators mit dem Abgas vermischt wird. Hierzu sind nach der Praxis Mischstrecken zwischen der Einbringung des Ammoniaks bzw. der Ammoniak-Vorläufersubstanz und dem SCR-Katalysator vorgesehen.

Obwohl mit aus der Praxis bekannten SCR-Katalysatoren und Abgasnachbehandlungssystemen, die einen SCR-Katalysator umfassen, bereits erfolgreich eine Abgasnachbehandlung, insbesondere eine Stickoxidreduzierung, erfolgen kann, besteht Bedarf daran, die SCR-Katalysatoren und Abgasnachbehandlungssysteme weiter zu verbessern. Insbesondere besteht Bedarf an einer kompakten Bauform solcher SCR-Katalysatoren und Abgasnachbehandlungssysteme.

Hiervon ausgehend liegt der vorliegenden Erfindung die Aufgabe zugrunde, einen neuartigen SCR-Katalysator, ein neuartiges Abgasnachbehandlungssystem einer Brennkraftmaschine und eine Brennkraftmaschine mit einem solchen Abgasnachbehandlungssystem zu schaffen.

Diese Aufgabe wird durch einen SCR-Katalysator für ein Abgasnachbehandlungssystem einer Brennkraftmaschine nach Anspruch 1 gelöst. Der erfindungsgemäße SCR-Katalysator weist eine Tragstruktur für von Abgas durchströmbare Wabenkörper auf, die von einem metallischen Gehäuse abschnittsweise umgeben sind. Die Tragstruktur verfügt über einen ersten plattenartigen Tragkörper mit ersten Öffnungen, über einen zweiten plattenartigen Tragkörper mit zweiten Öffnungen und über sich zwischen den Tragkörpern erstreckende Streben, die zusammen Aufnahmebereiche für die Wabenkörper definieren. Jeder der Wabenkörper ist über eine jeweilige erste Öffnung des ersten Tragkörpers, die eine größere Querschnittsfläche als der von dem jeweiligen Gehäuse umgebenen Wabenkörper aufweist, in einen jeweiligen Aufnahmebereich für den jeweiligen Wabenkörper einführbar, wobei eine jeweilige zweite Öffnung des zweiten Tragkörpers eine kleinere Querschnittsfläche als der von dem jeweiligen Gehäuse umgebene Wabenkörper, sodass der jeweilige Wabenkörper ausschließlich über die jeweilige erste Öffnung in den jeweiligen Aufnahmebereich einführbar ist und aus demselben entnehmbar ist. Mit dem ersten Tragkörper sind rahmenartige Haltemittel für einen oder mehrere Wabenkörper verbunden, um in den jeweiligen Aufnahmebereichen angeordnete Wabenkörper in der Tragstruktur zu fixieren.

Ein solcher SCR-Katalysator zeichnet sich durch eine kompakte Bauform aus. Die einzelnen Wabenkörper können bei kompakter Bauform einfach und sicher in der Tragstruktur des SCR-Katalysators montiert werden. Im Bedarfsfall können einzelne Wabenkörper ausgetauscht werden.

Nach einer vorteilhaften Weiterbildung ist das jeweilige rahmenartige Haltemittel mit dem ersten Tragkörper über Befestigungsschrauben oder Befestigungsbolzen verbunden, wobei sich zumindest einige, vorzugsweise alle, der Befestigungsschrauben oder Befestigungsbolzen durch erste Federelemente hindurch erstrecken, die sich mit einem ersten Ende am rahmenartigen Haltemittel und mit einem zweiten Ende an der jeweiligen Befestigungsschraube oder dem jeweiligen Befestigungsbolzen abstützen. Zwischen dem zweiten Tragkörper und den von dem Gehäuse umgebenen Wabenkörpern sind vorzugsweise zweite Federelemente angeordnet, die sich mit einem ersten Ende an dem zweiten Tragkörper und mit einem zweiten Ende an dem Gehäuse eines jeweiligen Wabenkörpers abstützen. Diese Weiterbildungen dienen der Bereitstellung einer kompakten Bauform des SCR-Katalysators. Ein weiterer Vorteil dieser Merkmale besteht darin, dass thermisch bedingte Längenänderungen im Bereich der Tragstruktur sowie der Wabenkörper kompensiert werden können.

Nach einer vorteilhaften Weiterbildung überdeckt das rahmenartige Haltemittel das Gehäuse des jeweiligen Wabenkörpers, wobei zwischen dem rahmenartigen Haltemittel und dem Gehäuse des jeweiligen Wabenkörpers ein Dichtelement angeordnet ist, welches vorzugsweise eine Dichtschnur aus einem Glasfaserwerkstoff ist. Solche Dichtelemente unterstützen die Bereitstellung einer kompakten Bauform. Insbesondere in Kombination mit den Federelementen gewährleisten die Dichtelemente auch bei thermisch bedingten Längenänderungen im Bereich der Tragstruktur sowie der Wabenkörper eine gute Abdichtung der Wabenkörper des SCR-Katalysators.

Das erfindungsgemäße Abgasnachbehandlungssystem ist in Anspruch 8 definiert. Die erfindungsgemäße Brennkraftmaschine ist in Anspruch 9 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: eine schematisierte, perspektivische Ansicht einer Brennkraftmaschine mit einem Abgasnachbehandlungssystem;
- Fig. 2:: ein Detail des Abgasnachbehandlungssystems der Fig. 1;
- Fig. 3:: ein Detail aus dem Abgasnachbehandlungssystem der Fig. 1 und 2 im Bereich eines SCR-Katalysators;

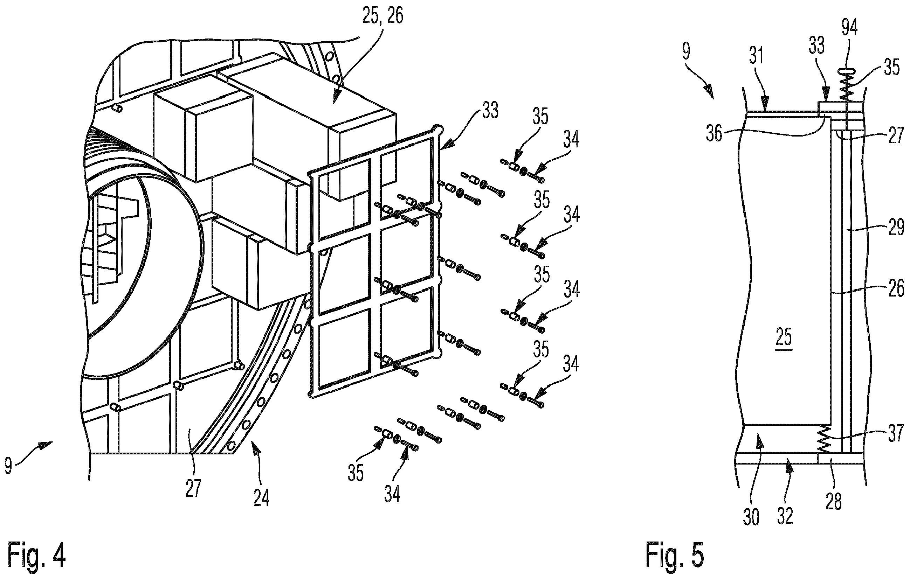

- Fig. 4: ein weiteres Detail aus dem Abgasnachbehandlungssystem im Bereich des SCR-Katalysators; und
- Fig. 5: einen ausschnittweisen Querschnitt durch den SCR-Katalysators.

Die hier vorliegende Erfindung betrifft einen SCR-Katalysators für ein Abgasnachbehandlungssystem und ein Abgasnachbehandlungssystem einer Brennkraftmaschine, so zum Beispiel einer stationären Brennkraftmaschine in einem Kraftwerk oder einer auf einem Schiff zum Einsatz kommenden, nicht-stationären Brennkraftmaschine. Insbesondere kommt das Abgasnachbehandlungssystem an einer mit Schweröl betriebenen Schiffsdieselbrennkraftmaschine zum Einsatz.

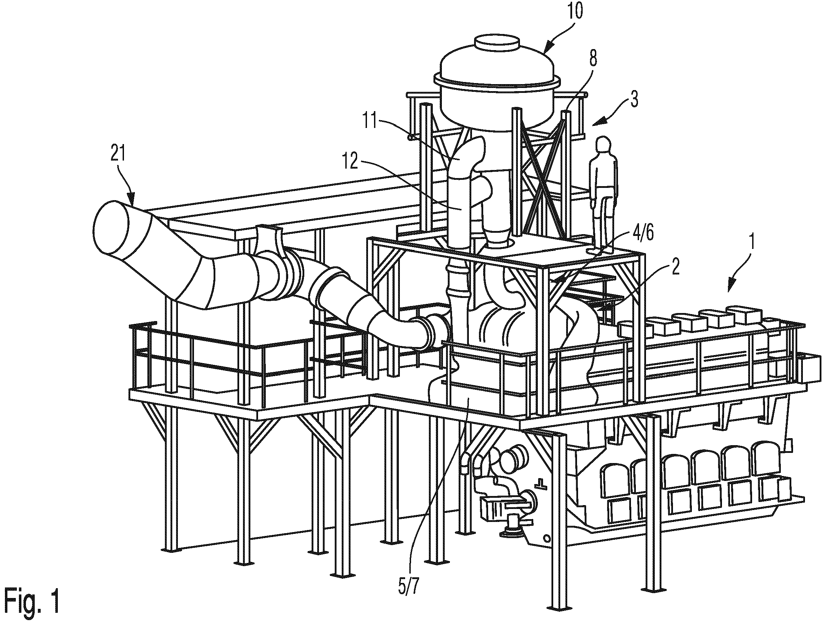

Fig. 1 zeigt eine Anordnung aus einer Brennkraftmaschine 1 mit einem Abgasturboaufladungssystem 2 und einem Abgasnachbehandlungssystem 3. Bei der Brennkraftmaschine 1 kann es sich um eine instationäre oder stationäre Brennkraftmaschine handeln, insbesondere um eine instationär betriebene Schiffsbrennkraftmaschine.

Abgas, welches die Zylinder der Brennkraftmaschine 1 verlässt, wird im Abgasaufladungssystem 2 genutzt, um aus der thermischen Energie des Abgases mechanische Energie zur Verdichtung von dem Verbrennungsmotor 1 zuzuführender Ladeluft zu gewinnen.

So zeigt Fig. 1 eine Brennkraftmaschine 1 mit einem Abgasturboaufladungssystem 2, welches mehrere Abgasturbolader umfasst, nämlich einen ersten, hochdruckseitigen Abgasturbolader 4 und einen zweiten, niederdruckseitigen Abgasturbolader 5. Abgas, welches die Zylinder der Brennkraftmaschine 1 verlässt, strömt zunächst über eine Hochdruckturbine 6 des ersten Abgasturboladers 1 und wird in derselben entspannt, wobei hierbei gewonnene Energie in einem Hochdruckverdichter des ersten Abgasturboladers 4 genutzt wird, um Ladeluft zu verdichten. In Strömungsrichtung des Abgases gesehen ist stromabwärts des ersten Abgasturboladers 4 der zweite Abgasturbolader 5 angeordnet, über welchen Abgas, welches bereits die Hochdruckturbine 6 des ersten Abgasturboladers 4 durchströmt hat, geführt wird, nämlich über eine Niederdruckturbine 7 des zweiten Abgasturboladers 5. In der Niederdruckturbine 7 des zweiten Abgasturboladers 5 wird das Abgas weiter entspannt und hierbei gewonnene Energie in einem Niederdruckverdichter des zweiten Abgasturboladers 5 genutzt, um ebenfalls die den Zylindern der Brennkraftmaschine 1 zuzuführende Ladeluft zu verdichten.

Zusätzlich zu dem die beiden Abgasturbolader 4 und 5 aufweisenden Abgasaufladungssystem 2 umfasst die Brennkraftmaschine 1 das Abgasnachbehandlungssystem 3, bei welchem es sich um ein SCR-Abgasnachbehandlungssystem handelt. Das SCR-Abgasnachbehandlungssystem 3 ist vorzugsweise zwischen die Hochdruckturbine 6 des ersten Verdichters 5 und die Niederdruckturbine 7 des zweiten Abgasturboladers 5 geschaltet, sodass demnach Abgas, welches die Hochdruckturbine 6 des ersten Abgasturboladers 4 verlässt, zunächst über das SCR-Abgasnachbehandlungssystem 3 geführt werden kann, bevor dasselbe in den Bereich der Niederdruckturbine 7 des zweiten Abgasturboladers 5 gelangt.

In Fig. 1 ist das Abgasnachbehandlungssystem 3 stehend oberhalb der Brennkraftmaschine 1 angeordnet. Das Abgasnachbehandlungssystem 3 kann alternativ auch z.B. liegend oberhalb oder neben der Brennkraftmaschine 1 angeordnet sein.

Fig. 1 zeigt eine Abgaszuleitung 8, über die Abgas, ausgehend von der Hochdruckturbine 6 des ersten Abgasturboladers 4 in Richtung auf einen SCR-Katalysator 9 geführt werden kann, der in einem Reaktorraum 10 angeordnet ist.

Ferner zeigt Fig. 1 eine Abgasableitung 11, die der Ableitung des Abgases vom SCR-Katalysator 9 in Richtung auf die Niederdruckturbine 7 des zweiten Abgasturboladers 5 dient. Ausgehend von der Niederdruckturbine 7 strömt das Abgas über eine Leitung 21 insbesondere ins Freie.

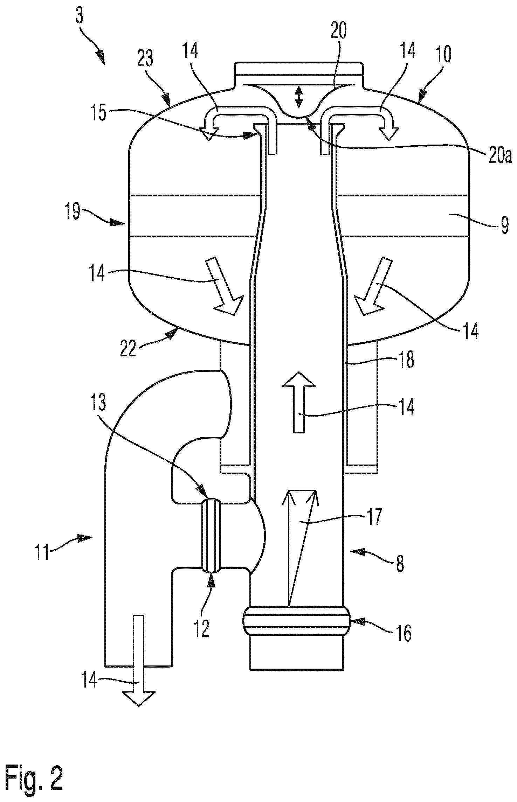

Die zum Reaktorraum 10 und damit zu dem im Reaktorraum 10 positionierten SCR-Katalysator 9 führende Abgaszuleitung 8 sowie die vom Reaktorraum 10 und damit vom SCR-Katalysator 9 wegführende Abgasableitung 11 sind über einen Bypass 12 gekoppelt, in die ein Absperrorgan 13 integriert ist. Bei geschlossenem Absperrorgan 13 ist der Bypass 12 verschlossen, sodass über dieselbe kein Abgas strömen kann. Dann hingegen, wenn das Absperrorgan 13 geöffnet ist, kann über den Bypass 12 Abgas strömen, und zwar vorbei am Reaktorraum 10 und demnach vorbei an dem im Reaktorraum 10 positionierten SCR-Katalysator 9. Fig. 2 verdeutlicht mit Pfeilen 14 die Strömung des Abgases durch das Abgasnachbehandlungssystem 3 bei über das Absperrorgan 13 verschlossenem Bypass 12, wobei Fig. 2 entnommen werden kann, dass die Abgaszuleitung 8 in den Reaktorraum 10 mit einem stromabwärtigen Ende 15 mündet, wobei das Abgas im Bereich dieses Endes 15 der Abgaszuleitung 8 eine Strömungsumlenkung um in etwa 180° bzw. annähernd 180° erfährt, wobei das Abgas nach der Strömungsumlenkung über den SCR-Katalysator 9 geführt wird.

Der Abgaszuleitung 8 des Abgasnachbehandlungssystems 3 ist eine Einbringeinrichtung 16 zugeordnet, über die in den Abgasstrom ein Reduktionsmittel eingebracht werden kann, insbesondere Ammoniak oder eine Ammoniak-Vorläufersubstanz, die benötigt wird, um im Bereich des SCR-Katalysators 9 Stickoxide des Abgases definiert umzusetzen. Bei dieser Einbringeinrichtung 16 des Abgasnachbehandlungssystems 3 handelt es sich vorzugsweise um eine Einspritzdüse, über welche das Ammoniak bzw. die Ammoniakvorläufersubstanz in den Abgasstrom innerhalb der Abgaszuführleitung 8 eingedüst wird. Fig. 2 verdeutlicht mit einem Kegel 17 die Eindüsung des Reduktionsmittels in den Abgasstrom im Bereich der Abgaszuleitung 8. Die Strecke des Abgasnachbehandlungssystems 3, die in Strömungsrichtung des Abgases gesehen stromabwärts der Einbringeinrichtung 16 und stromaufwärts des SCR-Katalysators 9 liegt, wird als Mischstrecke bezeichnet. Insbesondere stellt die Abgaszuleitung 8 stromabwärts der Einbringeinrichtung 16 eine Mischstrecke 18 bereit, in welcher das Abgas mit dem Reduktionsmittel stromaufwärts des SCR-Katalysators 9 gemischt werden kann.

Die Abgaszuleitung 8 mündet mit dem stromabwärtigen Ende 15 in den Reaktorraum 10. Diesem stromabwärtigen Ende 15 der Abgaszuleitung 8 ist ein Prallelement 20 zugeordnet, welches relativ zum stromabwärtigen Ende 15 der Abgaszuleitung 8 verlagerbar ist. Im gezeigten Ausführungsbeispiel ist das Prallelement 20 relativ zum Ende 15 der Abgaszuleitung 8, welches in den Reaktorraum 10 mündet, linear verlagerbar. Das Prallelement 20 ist relativ zum stromabwärtigen Ende 15 der Abgaszuleitung 8 verlagerbar, um entweder die Abgaszuleitung 8 am stromabwärtigen Ende 15 abzusperren oder dieselbe am stromabwärtigen Ende 15 freizugeben. Dann, wenn das Prallelement 20 die Abgaszuleitung 8 am stromabwärtigen Ende 15 absperrt, ist vorzugsweise das Absperrorgan 13 des Bypasses 12 geöffnet, um das Abgas dann vollständig am SCR-Katalysator 9 bzw. an dem den SCR-Katalysator 9 aufnehmenden Reaktorraum 10 vorbeizuführen. Dann, wenn das Prallelement 20 das stromabwärtige Ende 15 der Abgaszuleitung 8 freigibt, kann das Absperrorgan 13 des Bypasses 12 entweder vollständig geschlossen oder auch zumindest teilweise geöffnet sein.

Dann, wenn das Prallelement 20 das stromabwärtige Ende 15 der Abgaszuleitung 8 freigibt, ist die Relativposition des Prallelements 20 relativ zum stromabwärtigen Ende 15 der Abgaszuleitung 8 insbesondere von dem Abgasmassenstrom durch die Abgaszuleitung 8 und/oder von der Abgastemperatur des Abgases in der Abgaszuleitung 8 und/oder von der Menge des über die Einbringeinrichtung 16 in den Abgasstrom eingebrachten Reduktionsmittels abhängig.

Eine weitere Funktion des Prallelements 20 bei freigegebenem, stromabwärtigem Ende 15 der Abgaszuleitung 8 besteht darin, dass ggf. im Abgasstrom vorhandene Tropfen flüssigen Reduktionsmittels auf das Prallelements 20 gelangen, dort abgefangen und zerstäubt werden, um zu vermeiden, dass derartige Tropfen flüssigen Reduktionsmittels in den Bereich des SCR-Katalysators 9 gelangen. Über die Relativposition des Prallelements 20 zum stromabwärtigen Ende 15 der Abgaszuleitung 8 bei freigegebenem stromabwärtigen Ende 15 kann insbesondere festgelegt werden, ob das Abgas, welches im Bereich des stromabwärtigen Endes 15 der Abgaszuleitung 8 im Bereich des Prallelements 20 umgelenkt wird, stärker in Richtung auf radial innen positionierte Sektionen oder stärker in Richtung auf radial außen positionierte Sektionen des SCR-Katalysators 9 geleitet bzw. gelenkt wird.

Das Prallelement 20 ist vorzugsweise an einer der Abgaszuleitung 8 zugewandten Seite 20a unter Ausbildung einer Strömungsführung für das Abgas gewölbt ist, vorzugsweise glockenartig gewölbt. So weist die Seite 20a des Prallelements 20, die dem stromabwärtigen Ende 15 der Abgaszuleitung 8 zugewandt ist, an einem radial inneren Abschnitt des Prallelements 20 einen geringeren Abstand zum stromabwärtigen Ende 15 der Abgaszuleitung 8 auf als an einem radial äußeren Abschnitt derselben. Das Prallelement 20 ist demnach im Zentrum der Seite 20a in Richtung auf das stromabwärtigen Ende 15 der Abgaszuleitung 8 entgegen der Strömungsrichtung des Abgases eingezogen bzw. gewölbt.

Wie bereits ausgeführt, mündet die Abgaszuleitung 8 mit ihrem stromabwärtigen Ende 15 in den Reaktorraum 10, welcher den SCR-Katalysator 9 aufnimmt. Dabei durchdringt gemäß Fig. 2 die Abgaszuleitung 8 eine Ausnehmung des SCR-Katalysators 9 und endet mit ihrem stromabwärtigen Ende 15 benachbart zu einer oberen Seite 23 des Reaktorraums 10, wobei, wie bereits ausgeführt, das Abgas, welches die Abgaszuleitung am stromabwärtigen Ende 15 verlässt, um 180° umgelenkt wird, bevor dasselbe nachfolgend über den SCR-Katalysator 9 strömt.

Der SCR-Katalysator 9 weist eine Tragstruktur 24 für mehrere Wabenkörper 25 auf. Die Wabenkörper 25 verfügen dabei im gezeigten Ausführungsbeispiel vorzugsweise über einen rechteckigen Querschnitt, wobei die Wabenkörper 25 auch als Honeycombs bezeichnet werden. Die Wabenkörper 25 sind im Betrieb vom Abgas durchströmt, wobei das Abgas an einer ersten Stirnseite der Wabenkörper 25 in die Wabenkörper 25 eintritt und an einer gegenüberliegenden zweiten Stirnseite aus den Wabenkörpern 25 austritt. An sich zwischen den Stirnseiten erstreckenden Längsseiten der Wabenkörper 25 sind dieselben von einem metallischen Gehäuse abschnittsweise umgeben, wobei dieses metallische Gehäuse 26 auch als Canning bezeichnet wird.

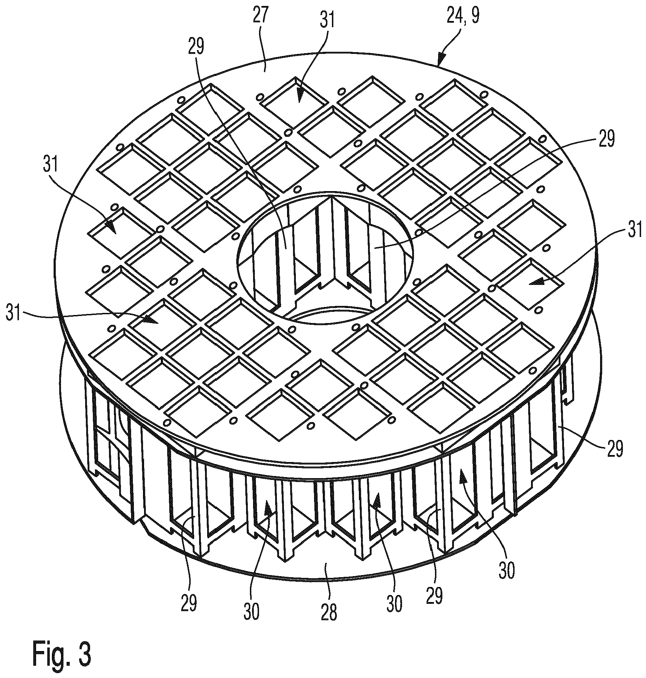

Die Tragstruktur 24 des SCR-Katalysators 9, die in Fig. 3 im Detail gezeigt ist, verfügt über einen ersten plattenartigen Tragkörper 27, einen zweiten plattenartigen Tragkörper 28 sowie über sich zwischen diesen plattenartigen Tragkörpern 27 und 28 erstreckende Streben 29, die zusammen Aufnahmebereiche 30 für die Wabenkörper 25 des SCR-Katalysators 9 definieren.

Der erste Tragkörper 27 der Tragstruktur 24 des SCR-Katalysators 9 weist erste Öffnungen 31 auf. Diese ersten Öffnungen 31 verfügen über eine größere Querschnittsfläche als die von dem jeweiligen Gehäuse 26 umgebenen Wabenkörper 25, sodass jeder der Wabenkörper 25, der von einem metallischen Gehäuse 26 abschnittsweise umgeben ist, über eine der ersten Öffnungen 31 in einen der jeweiligen Aufnahmebereiche 30 eingeführt werden kann.

Der zweite Tragkörper 28 der Tragstruktur 24 verfügt über zweite Öffnungen 32, deren Querschnittsfläche kleiner ist als die Querschnittsfläche der von dem Gehäuse umgebenen Wabenkörper 25. Demnach können die Wabenkörper 25, die vom jeweiligen Gehäuse 26 umgeben sind, ausschließlich über die jeweilige erste Öffnung 31 in den jeweiligen Aufnahmebereich 30 für den jeweiligen Wabenkörper 25 eingeführt bzw. aus demselben entnommen werden, jedoch nicht über die jeweilige zweite Öffnung 32.

Um die in die Aufnahmebereiche 30 eingesetzten Wabenkörper 25 an der Tragstruktur 24 zu fixieren, dienen rahmenartige Haltemittel 33, wobei jedes rahmenartige Haltemittel 33 der Fixierung eines oder mehrerer Wabenkörper 25 an der Tragstruktur 24 dient. Insbesondere dient jedes rahmenartige Haltemittel 33 der gemeinsamen Fixierung mehrerer Wabenkörper 25 an der Tragstruktur 24.

Das jeweilige rahmenartige Haltemittel 33 ist mit dem ersten Tragkörper 27 der Tragstruktur 24 über Befestigungsschrauben oder Befestigungsbolzen 34 verbunden, wobei das jeweilige rahmenartige Haltemittel 33 das Gehäuse 26 des jeweiligen Wabenkörpers 25 im Bereich des ersten plattenartigen Tragkörpers 27 überdeckt.

Die Befestigungsschrauben 34 erstrecken sich durch erste Federelemente 35 hindurch, wobei sich jedes dieser ersten Federelemente 35 mit einem ersten Ende am rahmenartigen Haltemittel 33 und mit einem zweiten, gegenüberliegenden Ende an der jeweiligen Befestigungsschraube oder dem jeweiligen Befestigungsbolzen 34 abstützt. Treten im Betrieb zum Beispiel thermisch bedingte Längenänderungen im Bereich der Tragstruktur 24 bzw. der Wabenkörper 25 auf, so können diese über die ersten Federelemente 35 kompensiert werden.

Wie bereits ausgeführt, überdeckt das jeweilige rahmenartige Haltemittel 33 das Gehäuse 26 des oder jedes über das jeweilige Haltemittel 33 an der Tragstruktur 24 fixierten Wabenkörpers 25, wobei zwischen dem rahmenartigen Haltemittel 33 und dem Gehäuse 26 des jeweiligen Wabenkörpers 25 ein Dichtelement 36 angeordnet ist. Bei diesem Dichtelement 36 handelt es sich vorzugsweise um eine Dichtschnur aus einem Glasfaserwerkstoff.

Zwischen dem zweiten Tragkörper 28 der Tragstruktur 24 und den Wabenkörpern 25, nämlich den Gehäusen 26 derselben, sind zweite Federelemente 37 positioniert, die sich mit einem ersten Ende an dem zweiten Tragkörper 28 der Tragstruktur 24 und mit einem zweiten Ende an dem Gehäuse 26 des jeweiligen Wabenkörpers 25 abstützen. Diese zweiten Federelemente 37 drücken den Wabenkörper 25 bzw. das Gehäuse 26 desselben gegen das Dichtelement 36 in Richtung auf das rahmenartige Haltemittel 33. Auch über diese zweiten Federelemente 37 können thermisch bedingte Längenänderungen kompensiert werden.

Der SCR-Katalysator 9 verfügt demnach über die Tragstruktur 24, die mehrere Wabenkörper 25 aufnimmt, wobei jeder Wabenkörper 25 abschnittsweise von einem metallischen Gehäuse 26 umgeben ist, und zwar unter Freilassen der Stirnseiten der Wabenkörper 25, über die Abgas in den jeweiligen Wabenkörper 25 eintritt bzw. austritt.

Die Tragstruktur 24 verfügt über die durch die Streben 29 voneinander beabstandeten, parallel zueinander verlaufenden plattenartigen Tragkörper 27 und 28 mit ihren Öffnungen 31 und 32. Die Wabenkörper 25 können über die ersten Öffnungen 31 des ersten Tragkörpers 27 in den jeweiligen Aufnahmebereichen 30 eingeführt und anschließend über ein rahmenartiges Haltemittel 33 an der Tragstruktur 24 fixiert werden.

Die rahmenartigen Haltemittel 33 dienen dabei jeweils vorzugsweise der Fixierung mehrerer Wabenkörper 25, wobei das jeweilige Haltemittel 33 das Gehäuse 26 der jeweiligen Wabenkörper 25 im Bereich des ersten Tragkörpers 27 überdeckt.

Zwischen dem jeweiligen Haltemittel 33 und dem oder jedem von dem jeweiligen Haltemittel 33 fixierten Wabenkörper 25 ist vorzugsweise das Dichtelement 36 positioniert. Erste und zweite Federelemente 35 und 37 dienen dem Ausgleich thermisch bedingter Längenänderungen, wobei die ersten Federelemente 35 sich am jeweiligen rahmenartigen Haltemittel 33 sowie an Befestigungsschrauben bzw. Befestigungsbolzen 35 abstützen, und wobei sich die zweiten Federelemente 37 an einer gegenüberliegenden Seite des SCR-Katalysators 9 bzw. der Tragstruktur 24 bzw. der Wabenkörper 25 einerseits an den Wabenkörpern 25 und andererseits am zweiten plattenartigen Tragkörper 28 abstützen.

### Bezugszeichenliste

- 1: Brennkraftmaschine
- 2: Abgasaufladungssystem
- 3: Abgasnachbehandlungssystem
- 4: Abgasturbolader
- 5: Abgasturbolader
- 6: Hochdruckturbine
- 7: Niederdruckturbine
- 8: Abgaszuleitung
- 9: SCR-Katalysator
- 10: Reaktorraum
- 11: Abgasableitung
- 12: Bypass
- 13: Absperrorgan
- 14: Abgasführung
- 15: Ende
- 16: Einbringeinrichtung
- 17: Einspritzkegel
- 18: Mischstrecke
- 19: Wandung
- 20: Prallelement
- 21: Leitung
- 22: Seite
- 23: Seite
- 24: Tragstruktur
- 25: Wabenkörper
- 26: Gehäuse
- 27: Tragkörper
- 28: Tragkörper
- 29: Strebe
- 30: Aufnahmebereich
- 31: Öffnung
- 32: Öffnung
- 33: Haltemittel
- 34: Befestigungsschrauben/Befestigungsbolzen
- 35: erstes Federelement
- 36: Dichtelement
- 37: zweites Federelement

## Patentansprüche

1. SCR-Katalysator (9) für ein Abgasnachbehandlungssystem (3) einer Brennkraftmaschine, nämlich für ein SCR-Abgasnachbehandlungssystem,
wobei der SCR-Katalysator (9) eine Tragstruktur (24) für von Abgas durchströmbare Wabenkörper (25) aufweist, die von einem metallischen Gehäuse (26) abschnittsweise umgeben sind,
wobei die Tragstruktur (24) einen ersten plattenartigen Tragkörper (27) mit ersten Öffnungen (31), einen zweiten plattenartigen Tragkörper (28) mit zweiten Öffnungen (32) und sich zwischen den Tragkörpern (27, 28) erstreckende Streben (29) aufweist, die zusammen Aufnahmebereiche (30) für die Wabenkörper (25) definieren,
wobei jeder der Wabenkörper (25) über eine jeweilige erste Öffnung (31) des ersten Tragkörpers (27), die eine größere Querschnittsfläche als der von dem jeweiligen Gehäuse (26) umgebenen Wabenkörper (25) aufweist, in einen jeweiligen Aufnahmebereich (30) für den jeweiligen Wabenkörper (35) einführbar ist, und wobei eine jeweilige zweite Öffnung (32) des zweiten Tragkörpers (28) eine kleinere Querschnittsfläche als der von dem jeweiligen Gehäuse (26) umgebenen Wabenkörper (25) aufweist, sodass der jeweilige Wabenkörper (25) ausschließlich über die jeweilige erste Öffnung (31) in den jeweiligen Aufnahmebereich (30) einführbar ist und aus demselben entnehmbar ist,
wobei mit dem ersten Tragkörper (27) rahmenartige Haltemittel (33) für einen oder mehrere Wabenkörper (25) verbunden sind, um in den jeweiligen Aufnahmebereichen (30) angeordnete Wabenkörper (25) in der Tragstruktur (24) zu fixieren.

2. SCR-Katalysator nach Anspruch 1, **dadurch gekennzeichnet, dass** das rahmenartige Haltemittel (33) das Gehäuse (26) des jeweiligen Wabenkörpers (25) überdeckt, wobei zwischen dem rahmenartigen Haltemittel und dem Gehäuse des jeweiligen Wabenkörpers ein Dichtelement (36) angeordnet ist.

3. SCR-Katalysator nach Anspruch 2, **dadurch gekennzeichnet, dass** das jeweilige Dichtelement (36) zwischen dem rahmenartigen Haltemittel (33) und dem Gehäuse (26) des Wabenkörpers (25) eine Dichtschnur aus einem Glasfaserwerkstoff ist.

4. SCR-Katalysator nach einem der Ansprüche 1 bis 3, **dadurch gekennzeichnet, dass** das jeweilige rahmenartige Haltemittel (33) mit dem ersten Tragkörper (27) über Befestigungsschrauben oder Befestigungsbolzen (34) verbunden ist, wobei sich zumindest einige der Befestigungsschrauben oder Befestigungsbolzen (34) durch erste Federelemente (35) hindurch erstrecken, die sich mit einem ersten Ende am rahmenartigen Haltemittel (33) und mit einem zweiten Ende an der jeweiligen Befestigungsschraube oder dem jeweiligen Befestigungsbolzen (34) abstützen.

5. SCR-Katalysator nach Anspruch 4, **dadurch gekennzeichnet, dass** sich jede Befestigungsschraube oder jeder Befestigungsbolzen (34) durch ein erstes Federelement (35) hindurch erstreckt.

6. SCR-Katalysator nach einem der Ansprüche 1 bis 5, **dadurch gekennzeichnet, dass** zwischen dem zweiten Tragkörper (28) und den von dem Gehäuse umgebenen Wabenkörpern (25) zweite Federelemente (37) angeordnet sind.

7. SCR-Katalysator nach Anspruch 6, **dadurch gekennzeichnet, dass** sich die zweiten Federelemente (37) mit einem ersten Ende an dem zweiten Tragkörper (28) und mit einem zweiten Ende an dem Gehäuse (26) eines jeweiligen Wabenkörpers (25) abstützen.

8. Abgasnachbehandlungssystem (3) einer Brennkraftmaschine, nämlich SCR-Abgasnachbehandlungssystem,
mit einem in einem Reaktorraum (10) aufgenommenen SCR-Katalysator (9),
mit einer zum Reaktorraum (10) und damit zum SCR-Katalysator (9) führenden Abgaszuleitung (8) und einer vom Reaktorraum (10) und damit vom SCR-Katalysator (9) wegführenden Abgasableitung (11),
mit einer der Abgaszuleitung (8) zugeordneten Einbringeinrichtung (16) zum Einbringen eines Reduktionsmittels, insbesondere von Ammoniak oder einer Ammoniak-Vorläufersubstanz, in das Abgas,
mit einer von der Abgaszuleitung (8) stromabwärts der Einbringeinrichtung (16) bereitgestellten Mischstrecke (18) zum Mischen des Abgases mit dem Reduktionsmittel stromaufwärts des Reaktorraums (10) bzw. SCR-Katalysators (9), **dadurch gekennzeichnet, dass**
der SCR-Katalysator (9) nach einem der Ansprüche 1 bis 7 ausgebildet ist.

9. Brennkraftmaschine (1), insbesondere mit einem Dieselkraftstoff oder mit einem Schwerölkraftstoff betriebene Brennkraftmaschine, mit einem Abgasnachbehandlungssystem (3) nach Anspruch 8.

10. Brennkraftmaschine nach Anspruch 9, **dadurch gekennzeichnet, dass** dieselbe ein mehrstufiges Abgasaufladungssystem (2) mit einem eine Hockdruckturbine (6) umfassenden ersten Abgasturbolader (4) und einem eine Niederdruckturbine (7) umfassenden zweiten Abgasturbolader (5) aufweist, wobei das Abgasnachbehandlungssystem (3) zwischen die Hockdruckturbine (6) und die Niederdruckturbine (7) geschaltet ist.
